# EUROPEAN PATENT SPECIFICATION

(11) **EP 1 564 880 B1**
(45) Date of publication and mention of the grant of the patent: **18.04.2007**
(21) Application number: 05002911.5
(22) Date of filing: 11.02.2005
(51) Int. Cl.: H02P 3/12, B60L 7/22, B60L 7/04

(54) **Vehicle with hill descent control**
Fahrzeug mit Bergabfahrtsregelung
Véhicule avec regulation de vitesse en descente

(30) Priority: 16.02.2004 JP 2004037827
(43) Date of publication of application: 17.08.2005
(73) Proprietor: AISIN SEIKI KABUSHIKI KAISHA, Kariya-shi, Aichi-ken 448-8650 (JP)
(72) Inventor: Sakuma, Masafumi, Kariya-shi Aichi-ken 448-8650 (JP); Tojima, Yuki, Kariya-shi Aichi-ken 448-8650 (JP)
(74) Representative: Kramer - Barske - Schmidtchen

(56) References cited:
- EP-A- 1 162 726
- WO-A-97/05691
- JP-A- 9 037 415
- US-A- 3 548 275
- PATENT ABSTRACTS OF JAPAN vol. 1997, no. 06, 30 June 1997 (1997-06-30) & JP 09 037415 A (SUZUKI MOTOR CORP), 7 February 1997 (1997-02-07)
- PATENT ABSTRACTS OF JAPAN vol. 013, no. 176 (E-749), 25 April 1989 (1989-04-25) & JP 01 005387 A (YASKAWA ELECTRIC MFG CO LTD), 10 January 1989 (1989-01-10)

## Description

### FIELD OF THE INVENTION

The present invention relates to a descent-restricting device. More particularly, the present invention pertains to a descent-restricting device for restricting a moving-back of a vehicle when, on an upward or downward incline of the hill, the vehicle starts from a stationary position.

### BACKGROUND

Known vehicles including an electric motor such as electric vehicles and hybrid vehicles are configured to control an actuation of the electric motor using parameters such as accelerator pedal operation amount, vehicle speed, and motor rotational speed when the vehicle starts from a stationary position on an upward incline of the hill, and the known electric motor is not configured to generate torque by the motor when an accelerator is OFF. Thus, the vehicle moves back (i.e., descends down a hill) when a brake pedal is released when starting the vehicle from the stationary position on the upward incline of the hill as long as the accelerator is OFF. In order to prevent the vehicle from moving back when starting from the stationary position on the upward incline of the hill, it is necessary to use a parking brake, or the like, which is not good for operability of vehicle and user-friendliness. It has been suggested that actuation control devices for electric vehicles enable not to move back when, on an upward incline of the hill, the vehicle starts from a stationary position by generating creep torque by controlling actuation of the electric motors.

For example, a known actuation control device for an electric vehicle including an accelerator pedal operation amount detection means, a brake pedal operation detection means, and a vehicle speed detection means is described in JPH09 (1997)-37415A, which discloses a descent-restricting device according to the preamble of claims 1 and 3. The known actuation control device for an electric vehicle described in JPH09 (1997)-37415A further includes a motor torque command means for detecting the vehicle speed when an accelerator pedal operation is not conducted, and commanding to generate regenerative braking when the vehicle speed is high and commanding to generate the creep torque when vehicle speed is low, and for detecting brake pedal operation and commanding smaller control value of the creep torque when the brake pedal operation is conducted than the case that the brake pedal operation is not conducted. In other words, the known actuation control device described in JPH09 (1997)-37415A is configured to start the vehicle while avoiding moving back of the vehicle on the slope when starting the vehicle from the stationary state on the upward incline of the hill by generating the creep torque irrespective of the application of the brake pedal operation when an accelerator pedal is not pressed on during a stationary state of the vehicle.

However, with the actuation control device for the electric vehicle described in JPH09 (1997)-37415A, although the creep torque is controlled when the accelerator pedal is not applied, a source of energy is required because the creep torque is constantly generated by motor actuation when starting the vehicle. Further, a hill hold control system, that is, a system for preventing a vehicle from moving back by operation of an automatic braking function when a driver use a brake pedal on a upward inclines until the driver use an accelerator pedal again, requires additional device or a source of energy.

A need thus exists for a descent-restricting device, which restricts a moving-back of a vehicle when starting the vehicle from a stationary state on an upward or downward incline without supplying energy.

### SUMMARY OF THE INVENTION

The above need is met by the present invention as defined in claims 1 and 3. Further advantageous embodiments are defined by the dependent claims.

According to another aspect of the present invention, a descent-restricting device for restricting a descent of a vehicle when starting the vehicle from a stationary state on an inline, includes a motor for transmitting power to a drive shaft of a vehicle, a power source, and a motor control portion for controlling electric power provided from the power source to the motor. The descent-restricting device further includes a switch portion provided on a wiring connecting the power source and the motor control portion. The switch portion connects and disconnects the power source and the motor control portion for purposes of restricting a descent of the vehicle.

According to the present invention, moving-back distance of the vehicle after a driver releasing the brake pedal until depressing the accelerator pedal is reduced because backward acceleration of the vehicle is reduced when the vehicle starts from a stationary position on an upward incline of a hill.

According to the present invention, it is not necessary to supply external energy from a battery and gas combustion, or the like, because a source of energy for restricting moving-back of the vehicle is externally provided from vehicle's, potential energy by means of the moving-back of the vehicle.

According to the present invention, the descent-restricting device is applicable to vehicles including motor which transmits power to a drive shift of vehicles such as electric vehicles, vehicles driven by fuel cells, and hybrid vehicles, or the like.

### BRIEF DESCRIPTION OF THE DRAWINGS

The foregoing and additional features and characteristics of the present invention will become more apparent from the following detailed description considered with reference to the accompanying drawings, wherein:

Fig. 1 shows a block view showing a construction of a descent-restricting device according to a first embodiment of the present invention.

Fig. 2 shows a partial circuit view showing an electronic circuit used for the descent-restricting device according to the first embodiment of the present invention.

Fig. 3 is a block view showing a construction of a descent-restricting device according to a second embodiment of the present invention.

Fig. 4 is a block view showing a construction of a descent-restricting device according to a third embodiment of the present invention.

Fig. 5 is a block view showing a construction of a modified construction of the descent-restricting device according to the third embodiment of the present invention.

Fig. 6 is a block view showing a construction of a descent-restricting device according to a fourth embodiment of the present invention.

Fig. 7 is a circuit view showing an electronic circuit used for the descent-restricting device according to the fourth embodiment of the present invention.

Fig. 8 is a block view showing a construction of a descent-restricting device according to a fifth embodiment of the present invention.

Fig. 9 is a block view showing a construction of a descent-restricting device according to a sixth embodiment of the present invention.

Fig. 10 is a block view showing a modified view of the descent-restricting device according to the sixth embodiment of the present invention.

### DETAILED DESCRIPTION

Embodiments of the present invention will be explained with reference to illustrations of drawing figures as follows.

A descent-restricting device according to a first embodiment of the present invention is installed in an electric vehicle.

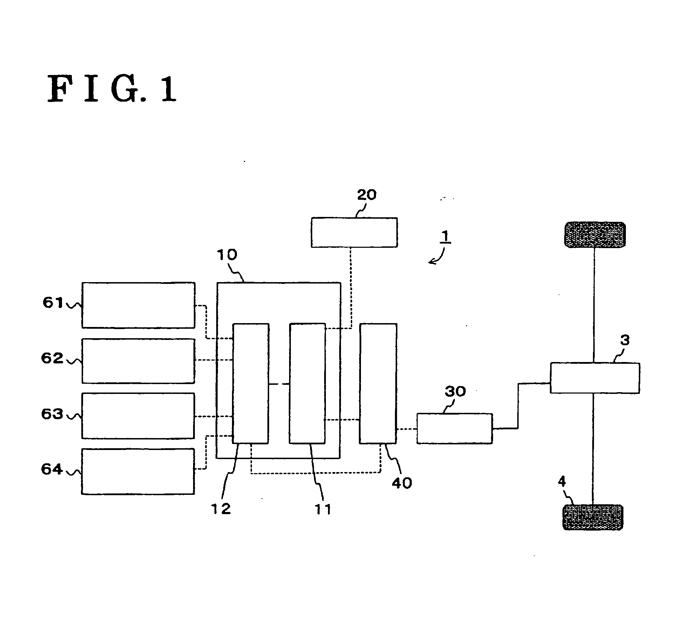

As shown in Fig. 1, a descent-restricting device 1 includes a motor control portion 10, a power source, 20, a motor 30, and a short-circuit switch portion 40, for restricting a moving-back of a vehicle (i.e., unwanted downward movement at slope) when the vehicle starts from a stationary state on an upward incline of a hill (i.e., both at forward movement and backward movement).

The motor control portion 10 (i.e., serving as a motor controller) includes an inverter 11 and a motor command portion 12, and is connected to the power source 20 for controlling power provided from the power source 20 to the motor 30.

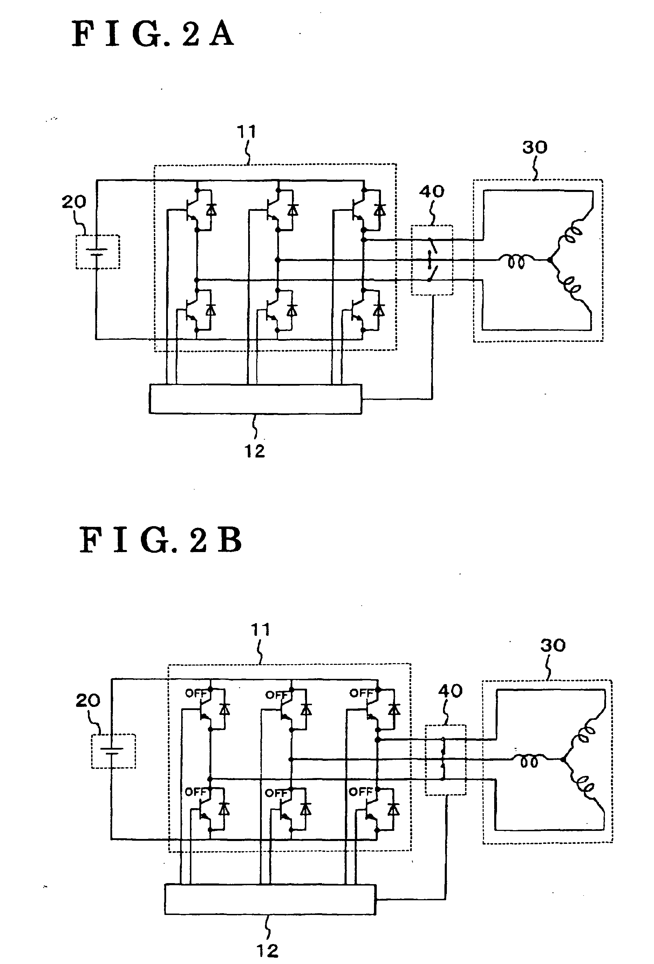

The inverter 11 (i.e., serving as a power converter) converts direct electric voltage supplied from the power source 20 to three phase alternating voltage in accordance with torque command of the motor command portion 12, and outputs the converted three phase alternating voltage to the motor 30. For example, the inverter 11 for actuating a three-phase Y-connection motor appears to be a circuit as shown in Fig. 2.

The motor command portion 12 serves as a controller for controlling power supply to the motor 30 by electrically connecting with each circuit element (e.g., a transistor, an IGBT, or the like) of the inverter 11, and by commanding electric voltage conversion of each of the circuit elements of the inverter 11 (shown in Fig. 2A). The motor command portion 12 is electrically connected to a speed detection portion 61, an accelerator pedal operation detection portion 62, a brake pedal operation detection portion 63, a shift position detection portion 64, and the short circuit switch portion 40. Information outputted from the speed detection portion 61, the accelerator pedal operation detection portion 62, the brake pedal operation detection portion 63, the shift position detection portion 64, and the short circuit switch portion 40, and information concerning ON/OFF state of the short-circuit switch 40 are inputted into the motor command portion 12. The motor command portion 12 is configured not to supply power from the power source 20 to the motor 30 when the short circuit switch portion 40 is ON (i.e., short-circuited). For example, the motor command portion 12 makes all the circuit elements such as the transistor and the IGBT of the inverter 11 be OFF state when the short circuit switch portion 40 is short-circuited (i.e., ON)(shown in Fig. 2B). On the other hand, when the short circuit at the short circuit switch portion 40 is released to open (OFF), the power is supplied from the power source 20 to the motor 30 (shown in Fig. 2A).

The power source 20 either stores or generates the power to be supplied to the motor 30, and for example, a secondary battery, a fuel cell, or the like, can be used as the power source 20.

The motor 30 is an electric motor for transmitting the power to a drive shaft of the vehicle. For example, the motor 30 includes a three-phase (delta-connection, Y-connection) DC brushless motor (shown in Fig. 2). Rotation of the motor 30 is transmitted to wheels 4 via a transmission 3 (e.g., an automated manual transmission). The motor 30 includes a stator, and a rotor rotated in the stator. Either the stator or the rotor includes a permanent magnet. The permanent magnet is provided to generate the power by the motor 30 by the moving-back of the vehicle when the short circuit switch portion 40 is short-circuited. The motor 30 is not limited to the brushless motor, and a brush motor may be used as the motor 30.

The short-circuit switch portion 40 is provided among plural wirings connecting the motor 30 and the motor control portion 10, and serves as a switch (e.g., a relay, IGBT, or the like) for short-circuiting or release the short circuit to open circuit (i.e., ON/OFF) among the wirings. The short circuit switch portion 40 detects the ON/OFF state to send the information to the motor command portion 12.

The speed detection portion 61 is a means for detecting vehicle speed (e.g., a rotary sensor). The accelerator pedal operation detection portion 62 is a means for detecting operation amount of an accelerator pedal in a vehicle compartment (e.g., stroke sensor). The brake pedal operation detection portion 63 is a means for detecting the operation of the brake pedal in the vehicle compartment (e.g., stroke sensor). The shift position detection portion 64 is a means for detecting a position of a shift lever for gear shifting in the vehicle compartment (e.g., position sensor). The relations between the motor command portion 12 and the speed detection portion 62, the accelerator pedal operation detection portion 62, the brake pedal operation detection portion 63, and the shift position detection portion 61 respectively will be explained hereinafter.

Operation of the descent-restricting device according to the first embodiment of the present invention will be explained as follows. In this case, for the explanatory purpose, it is determined that a front of the vehicle is directed to upward direction of the slope.

First, the short-circuit switch portion 40 is short-circuited by depressing the brake pedal in order to prevent the moving-back as a preparation for starting the vehicle from the stationary state on the upward incline of the hill, and shifting the shift lever from neutral position (N range) to drive position (D range) (i.e., Step A1). That is, the motor command portion 12 short-circuits the wirings at the short circuit switch 40, and controls all the circuit elements of the inverter 11 to be OFF by detecting that the vehicle speed is at 0km/h by the speed detection portion 61, inputting the information concerning the vehicle speed into the motor command portion 12, simultaneously, by detecting that the brake pedal is depressed by the brake pedal operation detection portion 63, the information regarding the brake pedal operation is inputted into the motor command portion 12, simultaneously, by detecting that the shift lever is positioned at D range by the shift position detection portion 64, and inputting the information regarding the position of the shift lever at D range into the motor command portion 12. Accordingly, the descent-restricting device assumes descent-restricting state by braking by means of gravity of the vehicle per se.

Second, the motor command portion 12 maintains OFF state of all the circuit elements of the inverter 11, and the short circuit at the short circuit switch portion 40 during a state from the brake pedal being released until the accelerator pedal being pressed (i.e., Step A2). Thus, when the vehicle moves back, the power is generated by means of the permanent magnet provided in the motor 30, short circuit current is flowed in a coil in the motor 30, thus torque, in a direction to prevent the moving-back of the vehicle, is generated, and acceleration of the moving-back of the vehicle is reduced compared to the case that a terminal of the motor 30 is not short-circuited. Specifically, by the rotation of the rotor including the permanent magnet, the short circuit current is flowed in the coil wound around the stator by means of electromagnetic induction. Further, magnetic field is generated at the stator by the short circuit current, and the torque, in a direction to prevent the moving-back of the vehicle, is generated by a force affecting the rotor to rotate in a reverse direction of a rotational direction of the rotor by means of the magnetic field.

Third, when the accelerator pedal is depressed, the short circuit at the short circuit switch portion 40 is released to open the circuit (i.e., Step A3). That is, by detecting that the accelerator pedal is depressed at the accelerator pedal operation detection portion 62 and inputting the information regarding the accelerator pedal operation into the motor command portion 12, the motor command portion 12 releases the short circuit among the wirings of the short circuit switch portion 40 to open the circuit, and controls to supply the power from the power source 20 to the motor 30 at the inverter 11. Accordingly, the descent-restricting state of the motor 30 is released to start the vehicle. The motor command portion 12 releases the short circuit among the wirings at the short circuit switch portion 40 to open the circuit, and supplies the power from the power source 20 to the motor 30 by the inverter 11, or maintains the state to supply the power generated at the motor 30 to the power source 20 (i.e., battery) after the start of the vehicle until the vehicle stops, that is, during the state that the speed other than 0km/h is detected by the speed detection portion 61 and the information regarding the speed is inputted into the motor command portion 12.

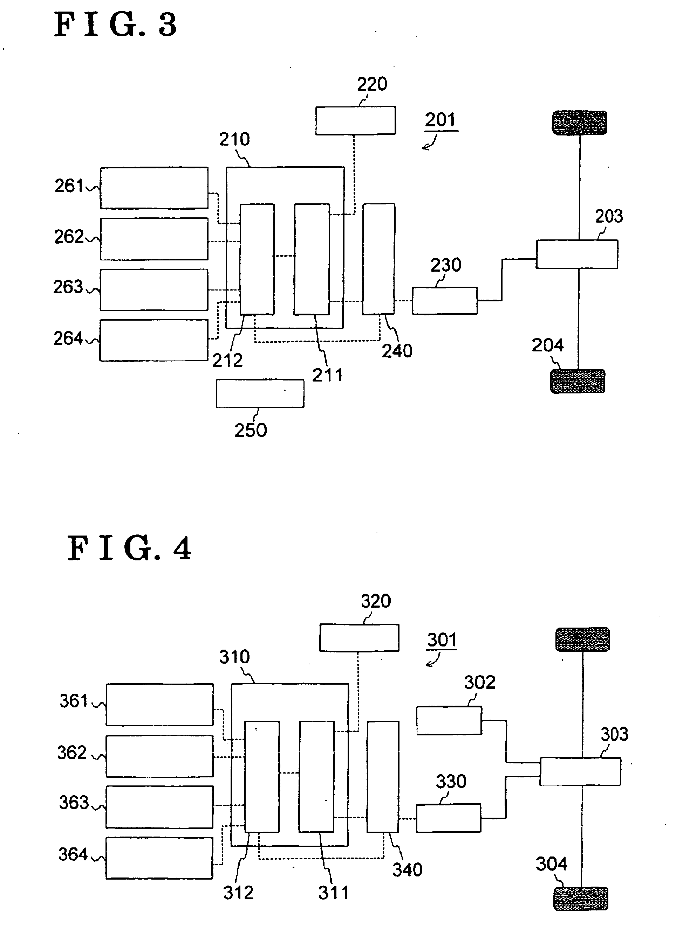

A descent-restricting device according to a second embodiment of the present invention will be explained referring to Fig. 3 as follows. The descent-restricting device according to the second embodiment of the present invention is installed in an electric vehicle.

As shown in Fig. 3, the descent-restricting device 201 according to the second embodiment is different from the first embodiment at a point that the descent-restricting device 201 according to the second embodiment includes a manual operation portion 250. In other words, according to the construction of the second embodiment of the present invention, short-circuiting and opening circuit (i.e., the release of the short circuit) at the short circuit switch 240 (i.e., ON/OFF) can be operated manually. The construction other than the manual operation portion 250 is approximately the same with the construction of the descent-restricting device 1 according to the first embodiment of the present invention (i.e., the operation of a motor control portion 210 is different from the first embodiment of the present invention).

The manual operation portion 250 is a manual switch provided at a predetermined position in a vehicle compartment, and is electrically connected to the short circuit switch portion 240. In other words, the manual operation portion 250 enables to selectively and manually short-circuit and open circuit at the short circuit switch portion 240 (i.e., ON/OFF operation).

Operation of the descent-restricting device 201 according to the second embodiment of the present invention will be explained as follows. For the explanatory purpose, it is determined that a vehicle front is directed to upward incline of the hill.

First, when the manual operation portion 250 is turned ON at a stationary state of the vehicle, the short circuit switch potion 240 is short-circuited (i.e., Step B1). That is, by inputting the information regarding the ON state at the manual operation portion 250 into a motor command portion 212, the motor command portion 212 short-circuits the wirings by the short circuit switch portion 240, and controls so that all the circuit elements of an inverter 211 assume OFF. Thus, the descent-restricting state is established. Timing for turning ON the manual operation portion 250 may be either before or after moving the shift lever from N range to D range and either before or after depressing the brake pedal.

Second, the motor command portion 212 maintains the short circuit at the short circuit switch portion 240 and OFF state of all the circuit elements of the inverter 211 during a state that that the brake pedal is depressed, and the shift lever is positioned at D range, until the brake pedal is released and the accelerator pedal is depressed (i.e., Step B2). Accordingly, when the vehicle moves back, the power is generated by means of a permanent magnet provided in a motor 230, the short circuit current is flowed in a coil in the motor 230, a torque, in a direction to prevent the moving-back of the vehicle, is generated, and backward acceleration of the vehicle is reduced than the case that a terminal of the motor 230 is not short-circuited.

Third, when the accelerator pedal is depressed, the short circuit at the short circuit switch 240 is released to open the circuit (i.e., Step B3). That is, the motor command portion 212 releases the short circuit among the wirings of the short circuit switch portion 240 to open the circuit, and controls to supply the power from a power source 220 to the motor 230 at the inverter 211 by detecting that the accelerator pedal is depressed by an accelerator pedal operation detection portion 262, and inputting the information regarding the accelerator pedal operation into the motor command portion 212. Accordingly, the descent-restricting state of the motor 230 is released, and the vehicle starts. In this case, after the start of the vehicle until the vehicle stops, that is during a state that the speed other than 0km/h is detected by a speed detection portion 261 and the information regarding the speed is inputted into the motor command portion 212, the motor command portion 212 maintains to release the short circuit among the wirings at the short circuit switch portion 240 to open the circuit, and to supply the power from the power source 220 to the motor 230 at the inverter 211, or to supply the power generated at the motor 230 to the power source 220 (i.e., battery).

A third embodiment of the present invention will be explained with reference to Fig. 4 as follows. A descent-restricting device according to the third embodiment of the present invention is installed in a hybrid vehicle including a combustion engine.

As shown in Fig. 4, a descent-restricting device 301 according to the third embodiment of the present invention is differentiated from the descent-restricting device 1 according to the first embodiment of the present invention at a point that the descent-restricting device 301 is applied to the hybrid vehicle including an engine 302. Other constructions of the descent-restricting device 301 according to the third embodiment of the present invention are approximately the same with the construction of the descent-restricting device 1 according to the first embodiment of the present invention. The engine 302 is mechanically connected to a transmission 303.

Operation of the descent-restricting device 301 according to the third embodiment of the present invention will be explained as follows. For the explanatory purpose, it is determined that a vehicle front is directed to upward incline of the hill.

First, when a vehicle is at stationary state and the engine 302 is at an idling state, wirings are short-circuited at a short circuit switch portion 340 by depressing a brake pedal in order to prevent moving-back of the vehicle as a preparation for starting the vehicle from a stationary state on an upward incline of the hill, and by shifting a shift lever form N range to D range (i.e., Step C1). That is, a motor command portion 312 short-circuits the wirings at the short circuit switch portion 340, and controls all circuit elements of the inverter 311 to be OFF by detecting that the vehicle speed is at 0km/h by a speed detection portion 361, inputting the information regarding the vehicle speed into the motor command portion 312, simultaneously, by detecting the operation of the brake pedal by a brake pedal operation detection portion 363, inputting the information regarding the brake pedal operation into the motor command portion 312, simultaneously, by detecting that the shift lever is positioned at D range by a shift position detection portion 364, and inputting the information regarding the position of the shift lever at D range into the motor command portion 312. Accordingly, the descent-restricting state is established.

Second, the motor command portion 312 maintains the short circuit at the short circuit switch portion 340, and OFF state of all the circuit elements of the inverter 311 after the release of the brake pedal until depressing an accelerator pedal (Step C2). Accordingly, when the vehicle moves back, the power is generated by means of a permanent magnet provided at a motor 330, short circuit current is flowed in a coil in the motor 330, torque, in a direction to prevent the moving-back of the vehicle, is generated, and backward acceleration of the vehicle is reduced than a case that a terminal of the motor 330 is not short-circuited.

Third, by depressing the accelerator pedal, the vehicle starts by means of the engine 302, and the short circuit at the short circuit switch portion 340 is released to open the circuit when vehicle traveling speed reaches a predetermined speed (e.g., 10km/h) (Step C3). That is, the motor command portion 312 releases the short circuit among wirings at the short circuit switch portion 340 to open circuit, and controls to supply the power from a power source 320 to the motor 330 at the inverter 311, or controls to supply the power generated at the motor 330 to the power source 320 (i.e., battery) by detecting that the vehicle speed is equal to or faster than the predetermined speed (e.g., 10km/h), and inputting the information regarding the vehicle speed into the motor command portion 312.

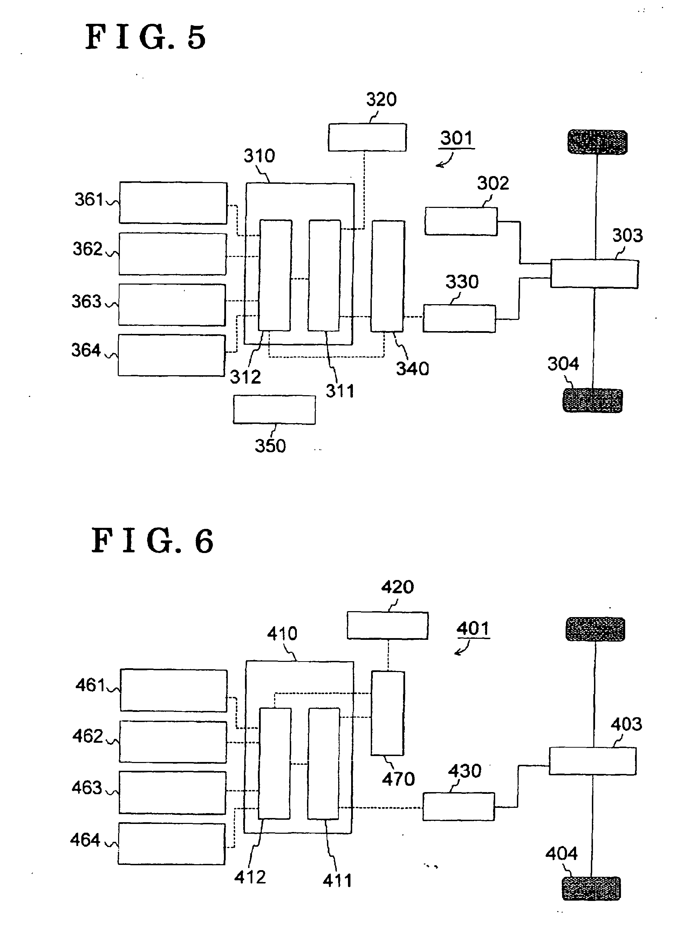

The descent-restricting device according to the third embodiment of the present invention may be modified as shown in Fig. 5. In other words, by providing a manual operation portion 350 likewise the second embodiment of the present invention, the wirings between the motor 330 and the inverter 311 may be compulsorily short-circuited immediately before starting the vehicle from a stationary position on an upward incline of the hill.

A fourth embodiment of the present invention will be explained with reference to Fig. 6 as follows. In this case, a descent-restricting device 401 according to the fourth embodiment of the present invention is installed in an electric vehicle.

As shown in Fig. 6, the descent-restricting device 401 includes a motor control portion 410, a power source 420, a motor 430, and a switch portion 470, for restricting moving-back of a vehicle when the vehicle starts from a stationary position on an upward incline of the hill. With the descent-restricting device 401 according to the fourth embodiment of the present invention, in place of the short circuit switch portion 40 of the descent-restricting device 1 according to the first embodiment of the present invention, the switch portion 470 positioned on wirings connecting the power source 420 and the motor control portion 410 (i.e., an inverter 411) is adapted. Constructions of the descent-restricting device 401 other than the switch portion 470 is approximately the same with the construction of the descent-restricting device 1 according to the first embodiment of the present invention (except the short circuit switch portion) (Operation of the motor control portion 410 of the fourth embodiment is different from the operation of the motor control portion 10 according to the first embodiment of the present invention).

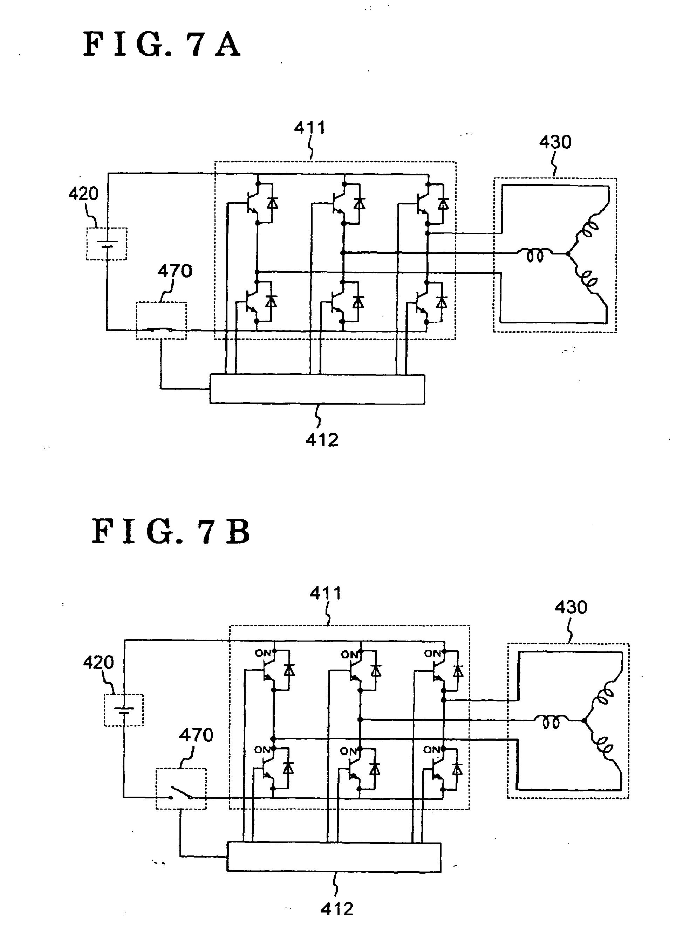

As shown in Fig. 7, the switch portion 470 is positioned on at least one of wirings connecting the power source 420 and the inverter 411, and serves as a switch (e.g., a relay, IGBT, or the like) for connecting and disconnecting the connection between the power source 420 and the inverter 411. A motor command portion 412 controls connecting and disconnecting operation by the switch portion 470. When the switch portion 470 is disconnected (OFF state), the motor command portion 412 short-circuits plural wirings connecting the motor 430 and the inverter 411 by achieving ON state of either all or part of the circuit elements of the inverter 411 (shown in Fig. 7B). When the switch portion 470 is connected (ON state), the motor command portion 412 releases the short circuit to open the circuit (shown in Fig. 7A). Upon the short-circuiting, in order to increase torque for preventing backward movement of the vehicle, all the circuit elements of the inverter 411 is determined to be ON state, and in order to reduce the torque preventing the moving-back of the vehicle, a part of the circuit elements of the inverter 411 is determined to be ON state. Thus, the torque for preventing the moving-back of the vehicle can be controlled by controlling the ON/OFF state (i.e., short-circuited state) of the circuit elements of the inverter 411 by the motor command portion 412.

Operation of the descent-restricting device 401 according to the fourth embodiment of the present invention will be explained as follows. For the explanatory purpose, it is determined that a vehicle front is directed to an upward incline of the hill.

First, a brake pedal is depressed for preventing the moving-back as a preparation for starting the vehicle from a stationary position on an upward incline of the hill, a shift lever is shifted from N range to D range, and a short circuit is conducted (Step D1). That is, the motor command portion 412 disconnects the switch portion 470 (OFF state), and either all or part of the of the circuit elements of the inverter 411 is determined to be ON state to short-circuit the wirings by detecting that the vehicle speed is at 0km/h by a speed detection portion 461, by inputting the information regarding the vehicle speed into the motor command portion 412, simultaneously, by detecting that the brake pedal is depressed by a brake pedal operation detection portion 463, by inputting the information regarding the brake pedal operation into the motor command portion 412, simultaneously, by detecting that the shift lever is positioned at D range by a shift position detection portion 464, and by inputting the information regarding the position of the shift lever at D range into the motor command portion 412. Accordingly, a descent-restricting state is established.

Second, after releasing the brake pedal until depressing the accelerator pedal, the motor command portion 412 maintains the disconnection (OFF state) at the switch portion 470 and ON state of either all or part of the circuit elements of the inverter 411 (Step D2). Accordingly, when the vehicle moves back, the power is generated by means of a permanent magnet provided in the motor 430, short circuit current is flowed in a coil in the motor 430, torque in a direction for preventing the moving-back of the vehicle is generated, and backward acceleration of the vehicle is reduced than a case that a terminal of the motor 430 is not short-circuited.

Third, when the accelerator pedal is depressed, the short circuit is released to open the circuit (Step D3). That is, the motor command portion 412 connects (ON state) the switch portion 470, and controls to supply the power from the power source 420 to the motor 430 at the inverter 411 by detecting that the accelerator pedal is depressed by an accelerator pedal operation detection portion 462, and inputting the information regarding the accelerator pedal operation into the motor command portion 412. Accordingly, the descent-restricting state of the motor 430 is released, and the vehicle starts. In this case, after the start of the vehicle until the vehicle stops, that is, during a state that the speed other than 0km/h is detected by the speed detection portion 461 and the information regarding the speed is inputted into the motor command portion 412, the motor command portion 412 establishes the connection of the switch portion 470, and supplies the power from the power source 420 to the motor 430 at the inverter 411, or maintains to supply the power generated at the motor 430 to the power source 420 (i.e., battery).

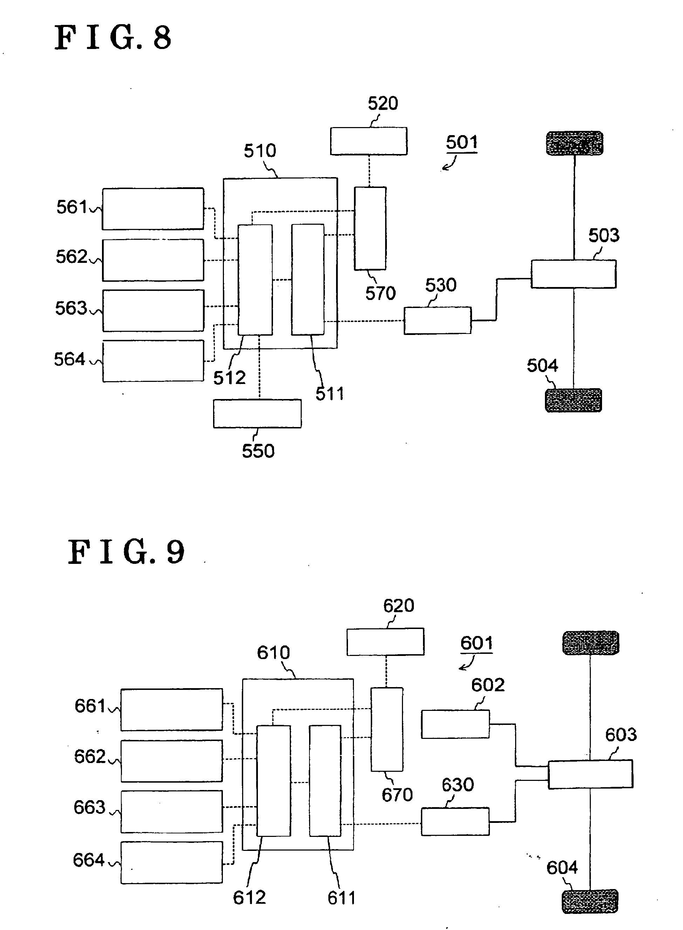

A fifth embodiment of the present invention will be explained with reference to Fig. 8 as follows. A descent-restricting device 501 according to the fifth embodiment of the present invention is installed in an electric vehicle.

As shown in Fig. 8, construction of the descent-restricting device 501 according to the fifth embodiment of the present invention is differentiated from the construction of the descent-restricting device 401 according to the fourth embodiment of the present invention at a point that the descent-restricting device 501 includes a manual operation portion 550. In other words, with the descent-restricting device 501 according to the fifth embodiment of the present invention, the short circuit and the release of the short circuit (i.e., opening circuit) are operated manually. The manual operation portion 550 is configured likewise the manual operation portion 250 according to the second embodiment of the present invention. Other constructions of the descent-restricting device 501 according to the fifth embodiment of the present invention is configured approximately the same with the descent-restricting device 401 according to the fourth embodiment of the present invention (i.e., operation of a motor control portion 510 is different from the motor control portion 410).

Operation of the descent-restricting device 501 according to the fifth embodiment of the present invention will be explained as follows. For the explanatory purpose, it is determined that a vehicle front is directed to an upward incline of the hill.

First, when the manual operation portion 550 is turned ON at stationary position of the vehicle, short-circuit is conducted (Step E1). That is, a motor command portion 512 disconnects a switch portion 570 (OFF state), and controls either the all or a part of circuit elements of an inverter 511 to be ON state to short-circuit wirings by inputting the information regarding ON state of the manual operation portion 550. Accordingly, descent-restricting state is established. Timing to turn the manual operation portion 550 ON may be either before or after shifting a shift lever from N range to D range, and either before or after depressing a brake pedal.

Second, during a state that the brake pedal is depressed and the shift lever is positioned at D range until the brake pedal is released and an accelerator pedal is depressed, the motor command portion 512 maintains the disconnection (OFF) at the switch portion 570 and ON state of either all or part of the circuit elements of the inverter 511 (Step E2). Accordingly, when the vehicle moves back, the power is generated by means of the permanent magnet provided in a motor 530, short circuit current is flowed on a coil in the motor 530, torque in a direction to prevent moving-back of the vehicle is generated, and backward acceleration of the vehicle is reduced than a case that a terminal of the motor 530 is not short-circuited.

Third, when an accelerator pedal is depressed, the short circuit is released to open the circuit (Step E3). That is, the motor command portion 512 connects the switch portion 570 (ON), and controls to supply the power from a power source 520 to the motor 530 at the inverter 511 by detecting that the accelerator pedal is depressed by an accelerator pedal operation detection portion 562, and inputting the information regarding the accelerator pedal operation into the motor command portion 512. Accordingly, the descent-restricting state of the motor 530 is released, and the vehicle starts. In this case, after the start of the vehicle until the vehicle stops, that is during a state that the speed other than 0km/h is detected by a speed detection portion 561 and the information regarding the speed is inputted into the motor command portion 512, the motor command portion 512 establishes the connection of the switch portion 570 and maintains to supply the power from the power source 520 to the motor 530 at the inverter 511, or to supply the power generated at the motor 530 to the power source 520 (i.e., battery).

A sixth embodiment of the present invention will be explained with reference to Fig. 9 as follows. A descent-restricting device 601 according to the sixth embodiment of the present invention is installed in a hybrid vehicle including a combustion engine.

As shown in Fig. 9, the descent-restricting device 601 according to the sixth embodiment of the present invention is differentiated from the descent-restricting device 401 according to the fourth embodiment of the present invention at a position that the descent-restricting device 601 is applied to a hybrid vehicle which includes an engine 602. Other constructions of the descent-restricting device 601 according to the sixth embodiment of the present invention are approximately the same to the construction of the descent-restricting device 401 according to the fourth embodiment (i.e., operation of a motor control portion 610 is different from the operation of the motor control portion 410). The engine 602 is mechanically connected to a transmission 603.

Operation of the descent-restricting device 601 according to the sixth embodiment of the present invention will be explained as follows. For the explanatory purpose, it is determined that a vehicle front is directed to an upward incline of the hill.

First, short circuit is conducted by depressing a brake pedal for preventing a vehicle from moving back as a preparation for starting vehicle from stationary position on an upward incline of the hill, and by shifting a shift lever from N range to D range when the vehicle is at stationary position and the engine 602 is at an idling state (Step F1). That is, by detecting that vehicle speed is at 0km/h by a speed detection portion 661, inputting the information regarding the vehicle speed into a motor command portion 612, simultaneously, by detecting that the brake pedal is depressed by a brake pedal operation detection portion 663, by inputting the information regarding the brake pedal operation into the motor command portion 612, simultaneously, by detecting that the shift lever is positioned at D range by a shift position detection portion 664, and by inputting the information regarding the position of the shift lever at D range into the motor command portion 612, the motor command portion 612 disconnects a switch portion 670 (OFF), and controls to short-circuit wirings by achieving ON state of all or a part of circuit elements of an inverter 611. Accordingly, a descent-restricting state is established.

Second, after depressing the brake pedal depressed until the accelerator pedal is depressed, the motor command portion 612 disconnects (OFF) the switch portion 670, and maintains ON state of all or a part of circuit elements of the inverter 611 (Step F2). Accordingly, when the vehicle moves back, the power is generated by means of a permanent magnet provided in a motor 630, short circuit current is flowed in a coil of the motor 630, torque in a direction to prevent the vehicle from moving back is generated, and backward acceleration of the vehicle is decreased than a case a terminal of the motor 630 is short-circuited.

Third, by depressing the accelerator pedal, the vehicle starts by means of the engine 602, and the short circuit is released to open the circuit when the vehicle speed reaches a predetermined speed (e.g., 10km/h) (Step F3). That is, the motor command portion 612 connects the switch portion 670 (ON) and controls to supply the power from a power source 620 to the motor 630 at the inverter 611, or to supply the power generated by the motor 630 to the power source 620 (battery) by detecting that the vehicle speed is equal to or faster than 10km/h by a speed detection portion 661, and inputting the information regarding the vehicle speed into the motor command portion 612.

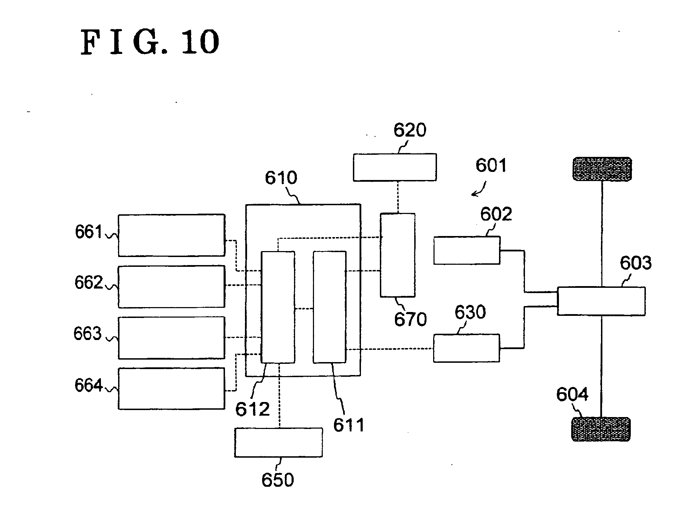

The descent-restricting device according to the sixth embodiment of the present invention may be modified as shown in Fig. 10. That is, by applying a manual operation portion 650 likewise the fifth embodiment of the present invention, wirings between the motor 630 and the inverter 611 is compulsorily short-circuited immediately before starting the vehicle from a stationary position on an upward incline of the hill.

Although the operations of the descent-restricting device are explained when the vehicle starts forward from the stationary position on the upward incline of the hill according to the first through sixth embodiments of the present invention, the descent-restricting device can be applied when the vehicle backs from the stationary position on the upward incline of the hill.

With the descent-restricting device according to the first embodiment of the present invention, the motor command portion 12 short-circuits the wirings at the short circuit switch portion 40, and controls all the circuit elements of the inverter 11 to be OFF by shifting the shift lever from N range to Rear position (R range), detecting that the shift lever is positioned at R range by the shift position detection portion 64, and inputting the information regarding the shift lever into the motor command portion 12, at Step A1 (shown in Fig. 1). Steps A2-A3 are likewise explained above.

With the descent-restricting device according to the second embodiment of the present invention, the motor command portion 212 controls to short-circuit at the short circuit switch portion 240 and OFF state of all the circuit elements of the inverter 211 during a state that the brake pedal is depressed and the shift lever is positioned at R range until the brake pedal is released and the accelerator pedal is depressed (shown in Fig. 3). Steps B2-B3 are likewise explained above.

With the descent-restricting device according to the third embodiment of the present invention, the motor command portion 312 short-circuits the wirings at the short circuit switch portion 340 and controls to turn OFF all the circuit elements of the inverter 311 by shifting the shift lever from N range to rear position (R range), detecting that the shift lever is positioned at R range by the shift position detecting portion 64, and inputting the information regarding the position of the shift lever into the motor command portion 312 at Step C1 (shown in Fig. 4). Steps C2-C3 are likewise explained above.

With the descent-restricting device according to the fourth embodiment of the present invention, the motor command portion 412 disconnects (OFF) the switch portion 470, and controls to turn ON all or part of circuit elements by shifting the shift lever from N range to the rear portion (R range), detecting that the position of shift lever is at R range by the shift position detecting portion 464, and inputting the information regarding the position of the shift lever into the motor command portion 412 (shown in Fig. 6). Steps D2-D3 are likewise explained above.

With the descent-restricting device according to the fifth embodiment of the present invention, the motor command portion 512 controls to disconnect (OFF) at the switch portion 570 and maintains ON state of all or part of the circuit elements of the inverter 511 during a state that the brake pedal is depressed, and the shift lever is positioned at R rage until the brake pedal is released and the accelerator pedal is depressed at Step E2 (shown in Fig. 8). Steps E1, E3 are likewise the mentioned as the foregoing.

With the descent-restricting device according to the sixth embodiment of the present invention, the motor command portion 612 controls to disconnect (OFF) the switch portion 670, and to turn all or part of the circuit elements of the inverter 611 ON by shifting the shift lever from N range to rear position (R range), detecting that the shift lever is positioned at R range by the shift position detection portion 664, and inputting the information regarding the position of the shift lever into the motor command apportion 612 at Step F1 (shown in Fig. 9). Steps F2-F3 are likewise explained above.

According to the embodiments of the present invention, the descent-restricting device for restricting the slips back of the vehicle upon starting the vehicle from the stationary position on the upward incline of the hill includes the motor for transmitting the power to the drive shaft of the vehicle, the power source, the motor control portion for controlling the electric power provided from the power source to the motor, and the short circuit switch portion for short-circuiting and opening circuit the plural wirings which connect the motor and the motor control portion. It is preferable to configure the motor control portion not to supply the power from the power source to the motor when the short circuit switch portion is short-circuited, and to supply the power from the power source to the motor when the short circuit is released to open the circuit.

According to the embodiments of the present invention, it is preferable that the motor control portion controls to short-circuit at the short circuit switch portion and open the circuit of the short circuit.

According to the embodiments of the present invention, it is preferable that the descent-restricting device includes the manual operation portion for manually operating the short circuit and opening of the circuit at the short circuit switch portion.

According to the embodiments of the present invention, the descent-restricting device for restricting the slips back of the vehicle upon starting the vehicle from the stationary position on the upward incline of the hill includes the motor for transmitting the power to the drive shaft of the vehicle, the power source, the motor control portion for controlling the electric power provided from the power source to the motor, and the switch portion provided on the wirings which connect the power source and the motor control portion for connecting and disconnecting therebetween. It is preferable that the motor control portion short-circuits the plural wirings which connect the motor and the motor control portion when the switch portion is disconnected, and opens the circuit of the short-circuited wirings when the switch portion is connected.

According to the embodiments of the present invention, it is preferable that the motor control portion controls the connection and the disconnection at the switch portion.

According to the embodiments of the present invention, it is preferable that the descent-restricting device includes the manual operation portion for manually selectively operating the connection and the disconnection at the switch portion.

According to the embodiments of the present invention, it is preferable that the descent-restricting device includes the motor including the stator and the rotor rotating in the stator, and either the rotor or the stator includes the permanent magnet.

According to the embodiments of the present invention, it is preferable that the motor includes the brush-less motor and the motor control portion includes the inverter for controlling the brush-less motor.

According to the embodiments of the present invention, it is preferable that the descent-restricting device includes the speed detection portion for detecting the vehicle speed, and the motor control portion compulsorily opens the circuit of the short-circuited wirings when the speed detected at the speed detection portion assumes equal to or greater than the predetermined value.

According to the embodiments of the present invention, it is preferable that the descent-restricting device includes the accelerator pedal operation detection portion for detecting the operation amount of the accelerator, and the motor control portion compulsorily opens the circuit of the short-circuited wirings when the accelerator pedal operation is detected at the accelerator pedal operation detection portion.

According to the embodiments of the present invention, it is preferable that the power of the motor is transmitted to the drive shaft via the automated manual transmission.

According to the embodiments of the present invention, moving-back distance of the vehicle after a driver releasing the brake pedal until depressing the accelerator pedal is reduced because the backward acceleration of the vehicle is reduced when the vehicle starts from the stationary position on the upward incline of the hill.

According to the embodiments of the present invention, it is not necessary to supply the external energy from a battery and gas combustion, or the like, because a source of energy for restricting the moving-back of the vehicle is externally provided from vehicle's, potential energy by means of the moving-back of the vehicle.

According to the embodiments of the present invention, the descent-restricting device is applicable to vehicles including motor which transmits power to a drive shift of the vehicles such as electric vehicles, vehicles driven by fuel cells, and hybrid vehicles, or the like.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A descent-restricting device (1, 201, 301) for restricting a descent of a vehicle when starting the vehicle from a stationary state on an incline, comprising:
a motor (30, 230, 330) generating a torque to a drive shaft of the vehicle;
an electric power source (20, 220, 320); and
a motor control portion (10, 210, 310) controlling electric power provided from the electric power source (20, 220, 320) to the motor (30, 230, 330);
**characterized in that**
the motor (30, 230, 330) includes a stator around which a plurality of coils is wound, and a rotor configured to rotate in the stator, and either the stator or the rotor includes a permanent magnet, and **in that** it further comprises
a plurality of wirings each electrically connecting a predetermined coil of the plurality of coils with an inverter (11) in the motor control portion (10, 210, 310); and
a short circuit switch portion (40, 240, 340) for short-circuiting a plurality of wirings connecting the motor (30, 230, 330) and the motor control portion (10, 210, 310) when starting the vehicle from the stationary state on the incline.

2. The descent-restricting device according to Claim 1, wherein the motor control portion (10, 210, 310) does not supply the electric power from the electric power source (20, 220, 320) to the motor (30, 230, 330) when the short circuit switch portion (40, 240, 340) is short-circuited.

3. A descent-restricting device (401, 501, 601) for restricting a descent of a vehicle when starting the vehicle from a stationary state on an incline, comprising:
a motor (430, 530, 630) generating a torque to a drive shaft of the vehicle;
an electric power source (420, 520, 620); and
a motor control portion (410, 510, 610) controlling electric power provided from the electric power source (420, 520, 620) to the motor (430, 530, 630);
**characterized in that**
the motor (430, 530, 630) includes a stator around which a plurality of coils is wound, and a rotor configured to rotate in the stator, and either the stator or the rotor includes a permanent magnet, and **in that** it further comprises
a plurality of wirings each electrically connecting a predetermined coil of the plurality of coils with an inverter (411) in the motor control portion (410, 510, 610); and
a switch portion (470, 570, 670) provided on a wiring connecting the electric power source (420, 520, 620) and the motor control portion (410, 510, 610), the switch portion (470, 570, 670) connecting and disconnecting the electric power source (420, 520, 620) and the motor control portion (410, 510, 610) for purposes of restricting a descent of the vehicle,
wherein the motor control portion (410, 510, 610) short-circuits the plurality of wirings connecting the motor (430, 530, 630) and the motor control portion (410, 510, 610) when the switch portion (470, 570, 670) is disconnected, and opens a circuit of the short-circuited wirings when the switch portion (470, 570, 670) is connected.

4. The descent-restricting device according to Claim 1-3, further comprising:
a speed detection portion (61, 261, 361, 461, 561, 661) for detecting vehicle speed;
wherein the motor control portion (10, 210, 310, 410, 510, 610) compulsorily opens the circuit of the short-circuited plurality of wirings when speed detected by the speed detection portion (61, 261, 361, 461, 561, 661) assumes equal to or greater than a predetermined value.

5. The descent-restricting device according to Claim 1-4, further comprising:
an accelerator pedal operation detection portion (62, 262, 362, 462, 562, 662) for detecting an operation amount of an accelerator; wherein the motor control portion (10, 210, 310, 410, 510, 610) compulsorily opens the circuit of the short-circuited plurality of wirings when operation of the accelerator is detected by the accelerator pedal operation detection portion (62, 262, 362, 462, 562, 662).

## Patentansprüche

1. Abfahrtsbegrenzende Einrichtung (1, 201, 301) zum Begrenzen einer Abfahrt eines Fahrzeugs, wenn das Fahrzeug aus einem unbewegten Zustand an einer Neigung gestartet wird, mit:
einem Motor (30, 230, 330), der ein Moment auf eine Antriebswelle des Fahrzeugs erzeugt;
einer Elektroenergiequelle (20, 220, 320); und
einem Motorsteuerabschnitt (10, 210, 310), der eine von der Elektroenergiequelle (20, 220, 320) an den Motor (30, 230, 330) abgegebene Elektroenergie steuert;
**dadurch gekennzeichnet, dass**
der Motor (30, 230, 330) einen Stator, um den eine Mehrzahl von Spulen gewickelt ist, und einen Rotor aufweist, der zum Drehen in dem Stator gestaltet ist, und entweder der Stator oder der Rotor einen Permanentmagneten aufweist, und **dadurch**, dass die Einrichtung weiter
eine Mehrzahl von Verdrahtungen, die jeweils eine bestimmte Spule der Mehrzahl von Spulen mit einem Wechselrichter (11) in dem Motorsteuerabschnitt (10, 210, 310) elektrisch verbinden; und
einen Kurzschlussschalterabschnitt (40, 240, 340) zum Kurzschließen einer Mehrzahl von Verdrahtungen, die den Motor (30, 230, 330) und den Motorsteuerabschnitt (10, 210, 310) verbinden, wenn das Fahrzeug aus dem unbewegten Zustand an der Neigung gestartet wird, aufweist.

2. Abfahrtsbegrenzende Einrichtung nach Anspruch 1, bei der der Motorsteuerabschnitt (10, 210, 310) keine Elektroenergie von der Elektroenergiequelle (20, 220, 320) an den Motor (30, 230, 330) liefert, wenn der Kurzschlussschalterabschnitt (40, 240, 340) kurzgeschlossen wird.

3. Abfahrtsbegrenzende Einrichtung (401, 501, 601) zum Begrenzen einer Abfahrt eines Fahrzeugs, wenn das Fahrzeug aus einem unbewegten Zustand an einer Neigung gestartet wird, mit:
einem Motor (430, 530, 630), der ein Moment auf eine Antriebswelle des Fahrzeugs erzeugt;
einer Elektroenergiequelle (420, 520, 620); und
einem Motorsteuerabschnitt (410, 510, 610), der eine von der Elektroenergiequelle (420, 520, 620) an den Motor (430, 530, 630) abgegebene Elektroenergie steuert;
**dadurch gekennzeichnet, dass**
der Motor (430, 530, 630) einen Stator, um den eine Mehrzahl von Spulen gewickelt ist, und einen Rotor aufweist, der zum Drehen in dem Stator gestaltet ist, und entweder der Stator oder der Rotor einen Permanentmagneten aufweist, und **dadurch**, dass die Einrichtung weiter
eine Mehrzahl von Verdrahtungen, die jeweils eine bestimmte Spule der Mehrzahl von Spulen mit einem Wechselrichter (411) in dem Motorsteuerabschnitt (410, 510, 610) elektrisch verbinden; und
einen Schalterabschnitt (470, 570, 670) aufweist, der an einer Verdrahtung, die die Elektroenergiequelle (420, 520, 620) und den Motorsteuerabschnitt (410, 510, 610) verbindet, vorgesehen ist, wobei der Schalterabschnitt (470, 570, 670) die Elektroenergiequelle (420, 520, 620) und den Motorsteuerabschnitt (410, 510, 610) zum Zweck des Begrenzens einer Abfahrt des Fahrzeugs verbindet und trennt,
wobei der Motorsteuerabschnitt (410, 510, 610) die Mehrzahl von Verdrahtungen, die den Motor (430, 530, 630) und den Motorsteuerabschnitt (410, 510, 610) verbinden, kurzschließt, wenn der Schalterabschnitt (470, 570, 670) getrennt wird, und einen Schaltkreis der kurzgeschlossenen Verdrahtungen freigibt, wenn der Schalterabschnitt (470, 570, 670) verbunden wird.

4. Abfahrtsbegrenzende Einrichtung nach Anspruch 1 bis 3 mit weiter:
einem Geschwindigkeitserfassungsabschnitt (61, 261, 361, 461, 561, 661) zum Erfassen einer Fahrzeuggeschwindigkeit;
wobei der Motorsteuerabschnitt (10, 210, 310, 410, 510, 610) zwangsweise den Schaltkreis der kurzgeschlossenen Mehrzahl von Verdrahtungen freigibt, wenn eine Geschwindigkeit, die von dem Geschwindigkeitserfassungsabschnitt (61, 261, 361, 461, 561, 661) erfasst wurde, einen Wert größer als oder gleich einem bestimmten Wert annimmt.

5. Abfahrtsbegrenzende Einrichtung nach Anspruch 1 bis 4 mit weiter:
einem Beschleunigungspedalbetätigungserfassungsabschnitt (62, 262, 362, 462, 562, 662) zum Erfassen einer Betätigungsgröße eines Beschleunigungspedals; wobei der Motorsteuerabschnitt (10, 210, 310, 410, 510, 610) zwangsweise den Schaltkreis der kurzgeschlossenen Mehrzahl von Verdrahtungen freigibt, wenn eine Betätigung des Beschleunigungspedals durch den Beschleunigungspedalbetätigungserfassungsabschnitt (62, 262, 362, 462, 562, 662) erfasst wird.

## Revendications

1. Dispositif de limitation de descente (1, 201, 301) pour limiter une descente d'un véhicule lorsque l'on démarre le véhicule à partir d'un état stationnaire sur une pente, comprenant :
un moteur (30, 230, 330) générant un couple pour un arbre d'entraînement du véhicule ;
une source de puissance électrique (20, 220, 320) ; et
une partie de commande de moteur (10, 210, 310) commandant la puissance électrique fournie à partir de la source de puissance électrique (20, 220, 320) au moteur (30, 230, 330) ;
**caractérisé en ce que**
le moteur (30, 230, 330) comprend un stator autour duquel une pluralité de bobines sont enroulées, et un rotor configuré pour tourner dans le stator, et l'un ou l'autre du stator et du rotor comprend un aimant permanent, et **en ce qu'**il comprend en outre
une pluralité de câblages reliant chacun électriquement une bobine prédéterminée de la pluralité de bobines à un inverseur (11) dans la partie de commande de moteur (10, 210, 310) ; et
une partie de commutation de court-circuit (40, 240, 340) pour court-circuiter une pluralité de câblages reliant le moteur (30, 230, 330) et la partie de commande de moteur (10, 210, 310) lorsque l'on démarre le véhicule à partir de l'état stationnaire sur la pente.

2. Dispositif de limitation de descente selon la revendication 1, dans lequel la partie de commande de moteur (10, 210, 310) ne fournit pas la puissance électrique de la source de puissance électrique (20, 220, 320) au moteur (30, 230, 330) lorsque la partie de commutation de court-circuit (40, 240, 340) est court-circuitée.

3. Dispositif de limitation de descente (401, 501, 601) pour limiter une descente d'un véhicule lorsque l'on démarre le véhicule à partir d'un état stationnaire sur une pente, comprenant :
un moteur (430, 530, 630) générant un couple pour un arbre d'entraînement du véhicule ;
une source de puissance électrique (420, 520, 620) ; et
une partie de commande de moteur (410, 510, 610) commandant la puissance électrique fournie à partir de la source de puissance électrique (420, 520, 620) au moteur (430, 530, 630) ;
**caractérisé en ce que**
le moteur (430, 530, 630) comprend un stator autour duquel une pluralité de bobines sont enroulées, et un rotor configuré pour tourner dans le stator, et l'un ou l'autre du stator et du rotor comprend un aimant permanent, et **en ce qu'**il comprend en outre
une pluralité de câblages reliant chacun électriquement une bobine prédéterminée de la pluralité de bobines à un inverseur (411) dans la partie de commande de moteur (410, 510, 610) ; et
une partie de commutation (470, 570, 670) prévue sur un câblage reliant la source de puissance électrique (420, 520, 620) et la partie de commande de moteur (410, 510, 610), la partie de commutation (470, 570, 670) connectant et déconnectant la source de puissance électrique (420, 520, 620) et la partie de commande de moteur (410, 510, 610) en vue de limiter une descente du véhicule,
dans lequel la partie de commande de moteur (410, 510, 610) court-circuite la pluralité de câblages reliant le moteur (430, 530, 630) et la partie de commande de moteur (410, 510, 610) lorsque la partie de commutation (470, 570, 670) est déconnectée, et ouvre un circuit des câblages court-circuités lorsque la partie de commutation (470, 570, 670) est connectée.

4. Dispositif de limitation de descente selon les revendications 1 à 3, comprenant en outre :
une partie de détection de vitesse (61, 261, 361, 461, 561, 661) pour détecter la vitesse du véhicule ; dans lequel la partie de commande de moteur (10, 210, 310, 410, 510, 610) ouvre obligatoirement le circuit de la pluralité court-circuitée de câblages lorsque la vitesse détectée par la partie de détection de vitesse (61, 261, 361, 461, 561, 661) est égale ou supérieure à une valeur prédéterminée.

5. Dispositif de limitation de descente selon les revendications 1 à 4, comprenant en outre :
une partie de détection d'actionnement de pédale d'accélérateur (62, 262, 362, 462, 562, 662) pour détecter une quantité d'actionnement d'un accélérateur ; dans lequel la partie de commande de moteur (10, 210, 310, 410; 510, 610) ouvre obligatoirement le circuit de la pluralité court-circuitée de câblages lorsque l'actionnement de l'accélérateur est détecté par la partie de détection d'actionnement de pédale d'accélérateur (62, 262, 362, 462, 562, 662).
